# EUROPEAN PATENT APPLICATION

(11) **EP 4 056 497 A1**
(43) Date of publication of application: **14.09.2022**
(21) Application number: 20884497.7
(22) Date of filing: 02.11.2020
(51) Int. Cl.: B65D 81/34

(54) **POUCH FOR MICROWAVE OVEN USE**

(30) Priority: 06.11.2019 JP 2019201323
(71) Applicant: Toyo Seikan Co., Ltd., Tokyo 141-8640 (JP)
(72) Inventor: MIURA Takashi, Yokohama-shi, Kanagawa 230-0001 (JP); HONGO Masahiro, Yokohama-shi, Kanagawa 230-0001 (JP); MATSUNAGA Shie, Yokohama-shi, Kanagawa 230-0001 (JP)
(74) Representative: dompatent von Kreisler Selting Werner - Partnerschaft von Patent- und Rechtsanwälten mbB
(86) International application number: PCT/JP2020/041006
(87) International publication number: WO 2021/090791

(57) **Abstract**

The present invention addresses an object for providing a microwavable pouch in which a slitting portion does not unintentionally rupture during heating while obtaining excellent openability. A microwavable pouch according to the present invention is formed into a bag shape by thermally bonding laminated films and includes an automatic steam venting mechanism. The laminated film has a configuration of polybutylene terephthalate layer/vapor-deposited polyethylene terephthalate layer/cast polypropylene layer, or a configuration of vapor-deposited polyethylene terephthalate layer/polybutylene terephthalate layer/cast polypropylene layer, and at least part of the intermediate layer of the laminated film has a slitting portion.

## Description

### Technical Field

The present invention relates to a microwavable pouch that is formed into a bag shape by thermally bonding laminated films that overlap each other and provided with an automatic steam venting mechanism that automatically releases steam from the pouch during heating.

### Background Art

Packaged food products have been marketed in which cooked or semi-cooked food is contained in a pouch formed into a bag shape by thermally bonding laminated films that overlap each other, and the food is then cooked in a microwave oven before eating.

When such a pouch is heated in a microwave oven, the steam generated from the food and the thermal expansion of the air inside the pouch increase the internal pressure of the pouch, which may cause the pouch to rupture or deform, and the food inside the pouch to scatter due to the rupturing of the pouch.

For this reason, in recent years, microwavable pouches are commonly provided with an automatic steam venting mechanism that automatically releases the steam inside the pouch during heating. As a pouch provided with such an automatic steam venting mechanism, a pouch is known to have an annular steam venting seal portion provided by thermally bonding part of the laminated films that overlap each other, and have a steam venting hole provided in a steam release portion surrounded by the annular steam venting seal portion (see, for example, Patent Documents 1 and 2).

In the pouch disclosed in Patent Document 1, when the internal pressure of the pouch increases due to heating in a microwave oven, part of the steam venting seal portion begins to separate, and the stress concentration due to the increase in the internal pressure of the pouch causes the steam venting seal portion to retract, and when the separation reaches a weakened portion, steam or the like is discharged to the outside.

### Citation List

### Patent Literature

Patent Document 1: JP 2002-249176 A
Patent Document 2: JP 2005-187079 A

### Summary of Invention

### Technical Problem

On the other hand, it is known that some pouches are processed so that a user can open the pouches by hand without using scissors or the like to take the contents out. One such process is a half-cut process which forms, for example, a linear slitting portion in the film.

By applying the half-cut process to the microwavable pouch as described above, the pouch may rupture from the processed part when the internal pressure of the pouch increases due to heating in the microwave oven.

The present invention has been made to solve the above-mentioned problem, and an object of the present invention is to provide a microwavable pouch in which a slitting portion does not rupture unintentionally during heating while obtaining excellent openability.

### Solution to Problem

A microwavable pouch according to the present invention is formed into a bag shape by thermally bonding laminated films, the microwavable pouch including an automatic steam venting mechanism configured to automatically release steam in a containing portion during heating. The automatic steam venting mechanism includes a steam venting seal portion configured to initiate separation when an internal pressure of the containing portion increases during heating and a steam release portion surrounded by the steam venting seal portion, each of the laminated films has a configuration of polybutylene terephthalate layer/vapor-deposited polyethylene terephthalate layer/cast polypropylene layer, or a configuration of vapor-deposited polyethylene terephthalate layer/polybutylene terephthalate layer/cast polypropylene layer, and at least part of an intermediate layer of each of the laminated films includes a slitting portion.

### Advantageous Effects of Invention

According to the microwavable pouch of the present invention, basically, the steam venting can be ensured by providing the automatic steam venting mechanism that automatically releases steam in the containing portion during heating, and further, the laminated films constituting the microwavable pouch each have the polybutylene terephthalate layer in an outer layer or an intermediate layer, and have a slitting portion in at least part of the intermediate layer, so that at least part of the polybutylene terephthalate layer remains in a state that does not have a slitting portion in the thickness direction. Thus, the polybutylene terephthalate exhibits the characteristics of being elongatable and difficult to break at high temperatures, so that unintentional rupture at the slitting portion during heating can be prevented while obtaining excellent openability.

### Brief Description of Drawings

FIG. 1 is a plan view illustrating a microwavable pouch according to an embodiment of the present invention.
FIG. 2 is an enlarged view illustrating a configuration of an automatic steam venting mechanism of the microwavable pouch illustrated in FIG. 1.
FIG. 3 is a diagram for explaining a state of steam venting from the pouch, and is a schematic diagram illustrating a cross section along a straight line connecting a center point of the pouch and a seal separation start point.

### Description of Embodiments

A microwavable pouch of the present invention is formed into a bag shape by heatsealing laminated films that overlap each other, and is configured to be provided with an automatic steam venting mechanism that automatically releases steam in the pouch to the outside during heating.

A microwavable pouch according to an embodiment of the present invention will be described below with reference to the drawings.

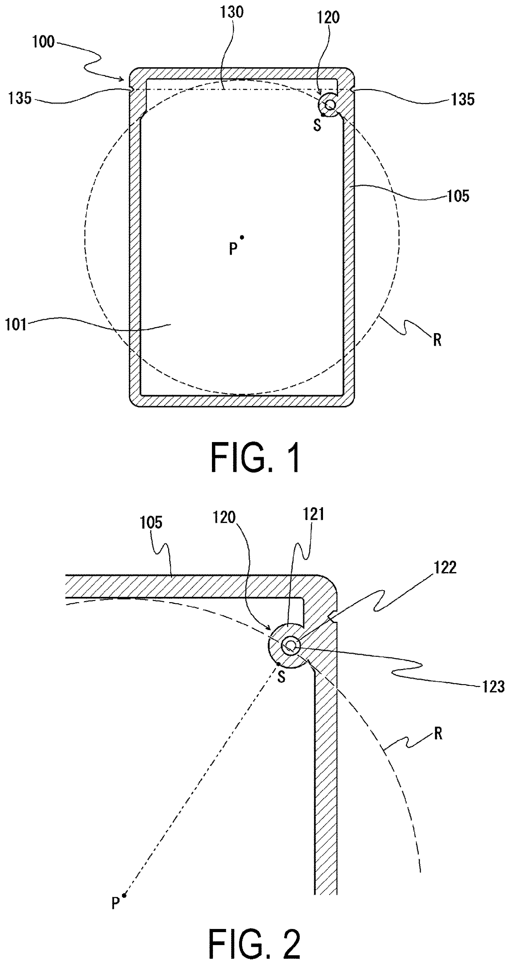

FIG. 1 is a plan view illustrating the microwavable pouch according to the embodiment of the present invention.

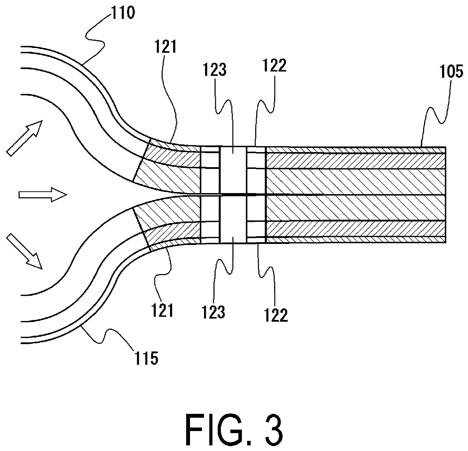

A microwavable pouch (hereinafter, simply referred to as a "pouch") 100 has, for example, a rectangular external shape in a plan view, and is configured such that a peripheral seal portion 105 formed by thermally bonding a front surface side laminated film 110 (see FIG. 3) and the back surface side laminated film 115 (see FIG. 3) surrounds four sides of a containing portion 101 located in a center of the pouch 100.

The laminated film has a layer configuration of (1) polybutylene terephthalate layer (PBT layer)/vapor-deposited polyethylene terephthalate layer (vapor-deposited PET layer)/cast polypropylene layer (CPP layer), or (2) vapor-deposited polyethylene terephthalate layer (vapor-deposited PET layer)/polybutylene terephthalate layer (PBT layer)/cast polypropylene layer (CPP layer).

A thickness of the polybutylene terephthalate layer is, for example, from 10 µm to 50 µm.

The vapor-deposited polyethylene terephthalate layer is a film containing a vapor-deposited film in which a vapor-deposited film made of metal oxide such as alumina or silicon oxide is formed on a polyethylene terephthalate film. A thickness of the vapor-deposited polyethylene terephthalate layer is, for example, from 10 µm to 50 µm.

The cast polypropylene layer is an inner layer that functions as a sealant layer. A thickness of the cast polypropylene layer is, for example, from 20 µm to 150 µm.

In the laminated film, a slitting portion 130 is formed in at least part of the intermediate layer (the vapor-deposited PET layer when having the layer configuration of (1) described above, or the PBT layer when having the layer configuration of (2) described above). The slitting portion 130 is a portion formed in a straight-line shape in the laminated film and extending in one direction in the plane direction, and connects two notches 135 formed on both sides of the peripheral seal portion 105 to extend across the containing portion 101.

When the laminated film has the layer configuration of (1) described above, the slitting portion 130 may be a slit that extends through the vapor-deposited polyethylene terephthalate layer, which is the intermediate layer, in the thickness direction, and further, the inner layer (sealant layer) may be partially slit in the thickness direction. When the laminated film has the layer configuration of (2) described above, preferably, the PBT layer is only partially slit in the thickness direction, and when the slitting portion 130 is a slit in which the PBT layer is only partially slit in the thickness direction, the depth of the slit may be such that it can be ensured that the thickness of the PBT layer remaining without being slit is at least, for example, 2 µm.

The slitting portion 130 can be formed by, for example, a half-cut process.

The slitting portion 130 is not limited to a straight line, and may be a curved line or a bent line. Further, the slitting portion 130 need not be a continuous line. For example, the slitting portion 130 may be formed intermittently in a chain line on a virtual straight line.

The pouch 100 is provided with an automatic steam venting mechanism 120 that automatically releases steam in a containing portion 101 to the outside during heating.

As also illustrated in FIGS. 2 and 3, the automatic steam venting mechanism 120 includes a steam venting seal portion 121 configured to initiate separation of the front surface side laminated film 110 and the back surface side laminated film 115 when the internal pressure of the containing portion 101 increases during heating, a steam release portion 122 surrounded by the steam venting seal portion 121, and a steam venting portion 123 formed in the steam release portion 122.

The steam venting seal portion 121 is formed, for example, in an annular shape by thermally bonding the front surface side laminated film 110 and the back surface side laminated film 115, and includes a seal separation start portion S at a portion of an outer peripheral end closest to the center of the containing portion 101, which initiates separation by steam generated in the containing portion 101 when heated in a microwave oven.

The steam venting seal portion 121 can be formed at the same time as or separately from the formation of the peripheral seal portion 105.

The steam release portion 122 is formed, for example, as an unsealed portion in which the front surface side laminated film 110 and the back surface side laminated film 115 are not thermally bonded.

Note that the specific aspect of the steam release portion 122 is not limited thereto, and for example, the steam release portion may be formed as a weakly bonded portion on which thermal bonding is applied so as to have a lower seal strength than those of the peripheral seal portion 105 and the steam venting seal portion 121, or as a patterned bonded portion where a knurled seal or the like is applied to the front surface side laminated film 110 and the back surface side laminated film 115.

The steam venting portion 123 is formed as a hole or a slit, and in the embodiment, for example, the steam venting portion 123 is formed as a through-hole having a circular opening shape.

The steam venting portion 123 may be provided only in either the front surface side laminated film 110 or the back surface side laminated film 115, or may be provided in both the front surface side laminated film 110 and the back surface side laminated film 115.

The seal separation start portion S of the steam venting seal portion 121 is preferably located on or inside the circumference of a virtual circle R inscribed at centers of the inner ends of the peripheral seal portion 105 on two short sides of the pouch 100. With such a configuration, steam in the pouch 100 can be discharged from a weakened portion, making the automatic opening by the automatic steam venting mechanism 120 more reliable.

In the pouch 100 according to the embodiment, the steam venting seal portion 121 is provided so as to be continuous with the peripheral seal portion 105 while satisfying the above conditions.

In addition, when the pouch 100 is heated, the pouch 100 expands from the center point P toward the peripheral seal portion 105 due to steam or the like generated from the contents, and stress concentration occurs radially as illustrated in FIG. 1 by the virtual circle R having a radius of a distance from the center point P to an inner end of the peripheral seal portion 105 on the short side. Due to this stress concentration, in the steam venting seal portion 121, the separation of the front surface side laminated film 110 and the back surface side laminated film 115 starts from the seal separation start portion S, which is the portion closest to the center point P of the pouch 100. Then, as illustrated in FIG. 3, the steam venting seal portion 121 is retracted due to the stress concentration by the increase in the internal pressure of the pouch 100, and when the separation reaches the steam release portion 122, the pouch 100 is partially opened and steam or the like is discharged to the outside through the steam venting portion 123.

The embodiment of the present invention has been described in detail above, but the present invention is not limited to the embodiment described above, and various design changes can be made without departing from the present invention described in the claim.

For example, the pouch of the present invention is not limited to the four-sided seal type described above, and can be applied to various types of pouches such as a standing pouch, a flat pouch, a three-sided seal type, a pillow type, and a gusset type.

In addition, the shape of the pouch may be any shape other than the rectangular shape illustrated in the above-described embodiment, for example, a trapezoidal shape or an irregular shape with some irregularities.

Further, the steam venting seal portion needs not to be provided so as to be continuous with the peripheral seal portion, but may be provided independently inside the peripheral seal portion. In addition, the steam venting seal portion may be formed in another shape such as a rectangular annular shape, and the dimensions thereof can be appropriately selected.

Further, when the steam venting portion is formed as a hole, the opening shape of the hole needs not to be circular, but may be any shape such as oval, triangular, quadrangular, trapezoidal, or a rice ball shape, and the dimensions thereof can be appropriately selected.

Examples for confirming the effects of the present invention will be described below.

### Example 1

Referring to the configuration illustrated in FIG. 1, a four-sided sealed microwavable pouch with an automatic steam venting mechanism (hereinafter, referred to as "sample A") was made. Sample A has a width dimension (right-left dimension in FIG. 1) of 130 mm, a length dimension (up-down dimension in FIG. 1) of 175 mm.

The laminated film used for sample A is a film in which a PBT layer (outer layer) having a thickness of 15 µm, a vapor-deposited PET layer (intermediate layer) having a thickness of 12 µm, and a CPP layer (inner layer) having a thickness of 70 µm are laminated in this order, with the slitting portion (130) formed at the position illustrated in FIG. 1. The slitting portion (130) extends through the intermediate layer in the thickness direction.

As a heating test, sample A containing 180 g of water as the content was heated under the heating conditions with a rated power of 500 W and a heating time of 3 minutes, and it was confirmed whether the slitting portion was ruptured and whether the steam venting seal portion was automatically opened (steam was discharged).

In sample A, it was confirmed that no rupture occurred at the slitting portion even when the internal pressure of the pouch increased due to heating. It was also confirmed that in sample A, the automatic opening by the automatic steam venting mechanism was properly conducted.

### Example 2

Sample B was produced in the same manner as sample A in Example 1 except that a film in which a vapor-deposited PET layer (outer layer) having a thickness of 12 µm, a PBT layer (intermediate layer) having a thickness of 15 µm, and a CPP layer (inner layer) having a thickness of 70 µm were laminated in this order was used as a laminated film, and the intermediate layer (PBT layer) was partially slit to a depth of 13 µm in the thickness direction as the slitting portion (130).

Sample B was subjected to a heating test in the same manner as in Example 1, and it was confirmed whether the slitting portion was ruptured and whether the steam venting seal portion was automatically opened (steam was discharged). As a result, it was confirmed that no rupture occurred at the slitting portion even when the internal pressure of the pouch increased due to heating. In sample B as well, it was confirmed that the automatic opening by the automatic steam venting mechanism was properly conducted.

### Reference Signs List

100 Microwavable pouch
101 Containing portion
105 Peripheral seal portion
110 Front surface side laminated film
115 Back surface side laminated film
120 Automatic steam venting mechanism
121 Steam venting seal portion
122 Steam release portion
123 Steam venting portion
130 Slitting portion
135 Notch
P Center point of pouch
R Virtual circle
S Seal separation start portion

## Claims

1. A microwavable pouch formed into a bag shape by thermally bonding laminated films, the microwavable pouch comprising:
an automatic steam venting mechanism configured to automatically release steam in a containing portion during heating,
wherein the automatic steam venting mechanism includes a steam venting seal portion configured to initiate separation when an internal pressure of the containing portion increases during heating and a steam release portion surrounded by the steam venting seal portion,
each of the laminated films has a configuration of polybutylene terephthalate layer/vapor-deposited polyethylene terephthalate layer/cast polypropylene layer, or a configuration of vapor-deposited polyethylene terephthalate layer/polybutylene terephthalate layer/cast polypropylene layer, and
at least part of the intermediate layer of each of the laminated films includes a slitting portion.
